# EUROPEAN PATENT SPECIFICATION

(11) **EP 3 963 980 B1**
(45) Date of publication and mention of the grant of the patent: **28.08.2024**
(21) Application number: 19927065.3
(22) Date of filing: 30.04.2019
(51) Int. Cl.: H04W 8/26, H04W 76/11, H04W 48/12, H04W 74/00, H04L 5/00

(54) **WIRELESS COMMUNICATION SCHEMES WITH EXTENDED IDENTIFIERS**
DRAHTLOSE KOMMUNIKATIONSSCHEMATA MIT ERWEITERTEN IDENTIFIKATOREN
PROCÉDÉS DE COMMUNICATION SANS FIL AVEC DES IDENTIFIANTS ÉTENDUS

(43) Date of publication of application: 09.03.2022
(73) Proprietor: ZTE Corporation, Shenzhen, Guangdong 518057 (CN)
(72) Inventor: GAO, Yuan, Shenzhen, Guangdong 518057 (CN); HUANG, He, Shenzhen, Guangdong 518057 (CN)
(74) Representative: Vossius & Partner Patentanwälte Rechtsanwälte mbB
(86) International application number: PCT/CN2019/085272
(87) International publication number: WO 2020/220297

(56) References cited:
- EP-A1- 2 986 039
- EP-A1- 3 413 616
- CN-A- 105 393 618
- US-A1- 2016 353 415
- US-A1- 2018 027 596
- US-A1- 2018 227 888
- US-A1- 2019 014 562
- QUALCOMM INCORPORATED: "RRC INACTIVE Context ID", vol. RAN WG2, no. Athens, Greece; 20180226 - 20180302, 16 February 2018 (2018-02-16), XP051400616, Retrieved from the Internet <URL:http://www.3gpp.org/ftp/tsg%5Fran/WG2%5FRL2/TSGR2%5F101/Docs/> [retrieved on 20180216]
- ERICSSON ET AL.: "Extending S-RNTI.", 3GPP TSG RAN WG3 MEETING #75 R3-120324., 10 February 2012 (2012-02-10), XP050566745

## Description

### TECHNICAL FIELD

This patent document generally relates to a network device, a user device and corresponding methods for wireless communications.

### BACKGROUND

Wireless communication technologies are moving the world toward an increasingly connected and networked society. The rapid growth of wireless communications and advances in technology has led to greater demand for capacity and connectivity. Other aspects, such as energy consumption, device cost, spectral efficiency, and latency are also important to meeting the needs of various communication scenarios. In comparison with the existing wireless networks, next generation systems and wireless communication techniques need to provide support for an increased number of users and devices.

EP 3 413 616 A1, EP 2 986 039 A1, US 2018/027596 A1 and 3GPP Draft R2-1803589 are related prior art documents.

### SUMMARY

The invention is specified by the independent claims. Preferred embodiments are defined in the dependent claims. This document relates to methods, systems, and devices for wireless communications with extended identifiers. The disclosed technology describes methods that can be implemented at a plurality of mobile devices (or terminals, or user equipment) or a plurality of networks (such as a base station, gNodeB) to support more various user scenarios.

In one aspect, a wireless communication method is provided to comprise transmitting, by a network device, to a user device, a configuration information including an indication on a long identifier having a length greater than that of a short identifier.

In another aspect, a wireless communication method is provided to comprise: receiving, by a user device, from a network device, a configuration information including an indication on a long identifier having a length greater than that of a short identifier; and applying the long identifier in a communication with the network device occurring after the receiving the configuration information.

In another aspect, a wireless communication apparatus comprising a processor configured to perform the disclosed methods is disclosed.

In another aspect, a computer readable medium having code stored thereon is disclosed. The code, when implemented by a processor, causes the processor to implement a method described in the present document.

The above and other aspects and their implementations are described in greater detail in the drawings, the descriptions, and the claims.

### BRIEF DESCRIPTION OF THE DRAWINGS

FIG. 1 shows an example of a base station (BS) and user equipment (UE) in wireless communication based on some implementations of the disclosed technology.
FIG. 2 shows an example of a block diagram of a portion of an apparatus based on some implementations of the disclosed technology.
FIG. 3 shows an example of a wireless communication scheme performed at a network device based on some implementations of the disclosed technology.
FIG. 4 shows an example of a wireless communication scheme performed at a user equipment based on some implementations of the disclosed technology.
FIGS.5a to 5c show examples of extended identifiers based on some implementations of the disclosed technology.
FIG. 6-11 shows examples of communications between a user device and a network device.

### DETAILED DESCRIPTION

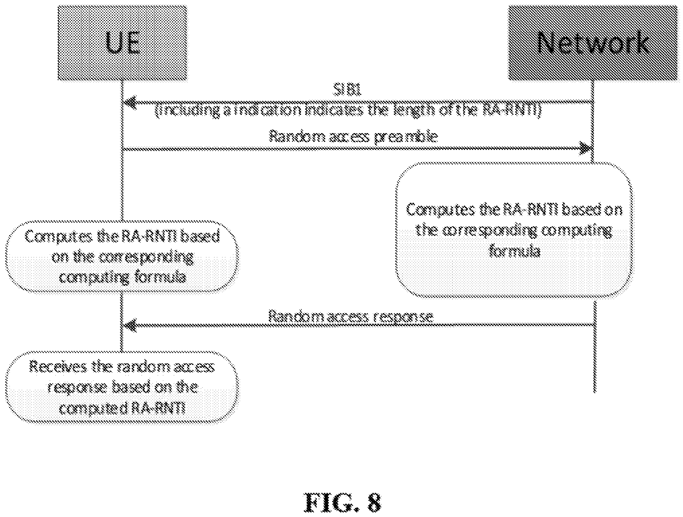

The embodiment of FIG. 8 falls under the scope of the appended claims. The other embodiments do not fall under the scope of the claims and are to be regarded as mere examples useful to better understand the invention.

The disclosed technology provides implementations and examples of wireless communication schemes using extended identifiers. In wireless communications, identifiers can be used in signaling and data transmissions Some implementations of the disclosed technology suggest techniques related to radio network temporary identifiers. Radio network temporary identifiers are used in the network to identify a certain UE within a cell during a RRC (Radio Resource Control) reconfiguration procedure, a RRC resume procedure, a random access procedure, and a RRC re-establishment procedure. Radio network temporary identifiers are also used by UE to receive system information and paging.

With the recent developments of wireless communications, as more various user scenarios (e.g. vehicular connectivity, airplanes connectivity and IOT connectivity) appear, the number of users within a certain cell is becoming greater than before. The existing radio network temporary identifiers may not be sufficient to identify all the UEs in a certain cell and thus there is a need to consider using extended radio network temporary identifiers. The disclosed technology proposes techniques for wireless communications based on extended identifiers. extending the radio network temporary identifiers and applying the extended network temporary identifiers in signaling and data transmission.

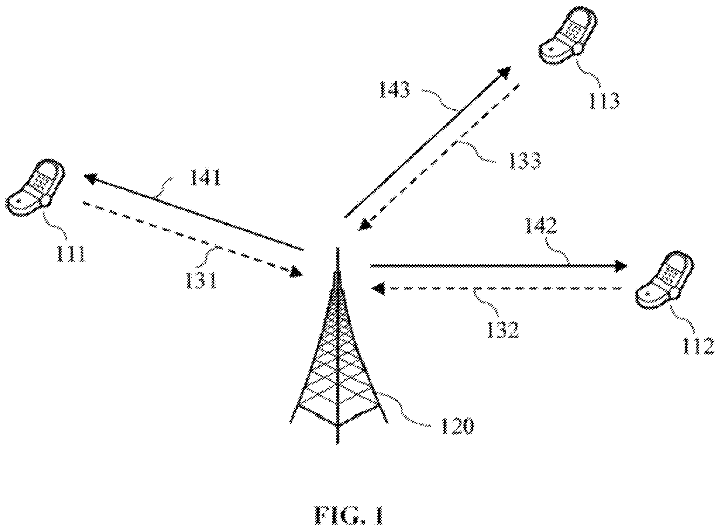

FIG. 1 shows an example of a wireless communication system (e.g., a 5G or NR cellular network) that includes a BS 120 and one or more user equipment (UE) 111, 112 and 113. In some embodiments, the UEs access the BS (e.g., the network) using implementations of the disclosed technology (131, 132, 133), which then enables subsequent communication (141, 142, 143) from the BS to the UEs. The UE may be, for example, a smartphone, a tablet, a mobile computer, a machine to machine (M2M) device, an Internet of Things (IoT) device, and so on.

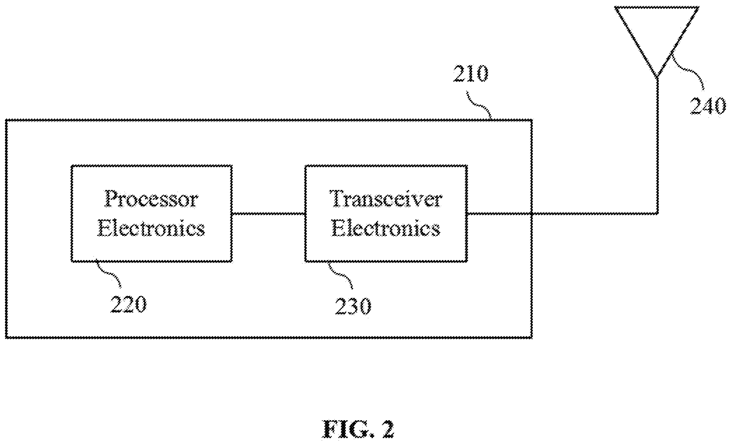

FIG. 2 shows an example of a block diagram representation of a portion of an apparatus. An apparatus 210 such as a base station or a wireless device (or UE) can include processor electronics 220 such as a microprocessor that implements one or more of the techniques presented in this document. The apparatus 210 can include transceiver electronics 230 to send and/or receive wireless signals over one or more communication interfaces such as antenna 240. The apparatus 210 can include other communication interfaces for transmitting and receiving data. The apparatus 210 can include one or more memories (not explicitly shown) configured to store information such as data and/or instructions. In some implementations, the processor electronics 220 can include at least a portion of transceiver electronics 230. In some embodiments, at least some of the disclosed techniques, modules or functions are implemented using the apparatus 210.

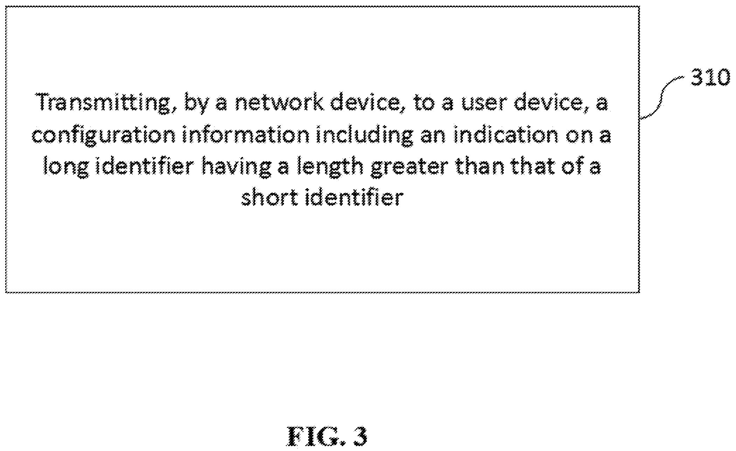

FIG. 3 shows an example of a wireless communication scheme performed at a network device based on some implementations of the disclosed technology. At step 310, a network device transmits to a user device a configuration information including an indication on a long identifier having a length greater than that of a short identifier.

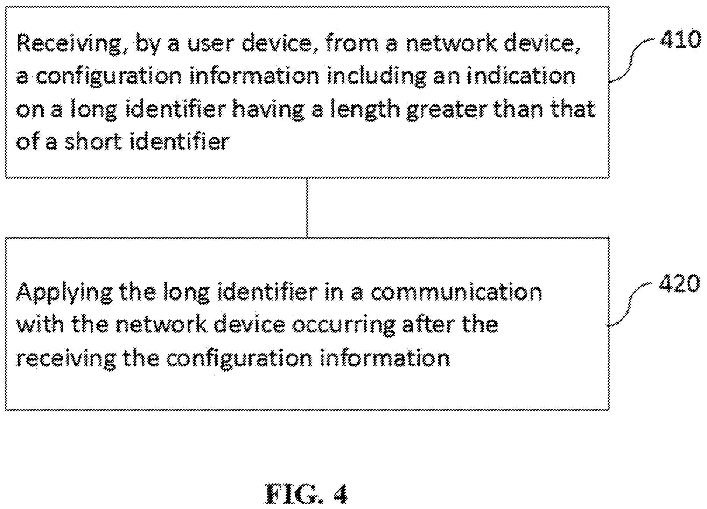

FIG. 4 shows an example of a wireless communication scheme performed at a UE based on some implementations of the disclosed technology. At step 410, a UE receives, from a network device, configuration information including an indication on a long identifier having a length greater than that of a short identifier. At 420, the UE applies the long identifier in a communication with the network device occurring after the receiving the configuration information.

In some implementations, the indication includes an indicator to inform the UE to use the long identifier instead of the short identifier. In some implementations, the indication includes the long identifier. In some implementations, the indication includes both the indicator and the long identifier. In some implementations, the configuration information includes information on radio network temporary identifier(s) (RNTI), e.g., length of RNTIs. In some implementations, the configuration information can be included in at least one of MIB (Master Information Block), SIB1 (System Information Block Type 1), or dedicated RRC signaling (e.g. RRC reconfiguration message).

To provide wireless communication techniques with extended identifiers (e.g., extended radio network temporary identifiers), following items 1-3 regarding types of radio network temporary identifiers extended, definitions of the extended radio network temporary identifiers, and how to indicate the UE to apply the extended radio network temporary identifiers need to be considered. In the descriptions below, the radio network temporary identifiers (RNTIs) are mainly discussed as the extendable identifiers but other identifiers can be extended.

Item 1: Examples of types of the radio network temporary identifiers that can have extended lengths are as follows:
1. P-RNTI (Paging radio network temporary identifier), which is used in paging and system information change notification.
2. SI-RNTI (System Information radio network temporary identifier), which is used in broadcast of system information.
3. RA-RNTI (Random Access radio network temporary identifier), which is used in random access response.
4. C-RNTI (Cell Access radio network temporary identifier), which is used in RRC (Radio Resource Control) reconfiguration procedure, RRC Resume procedure, random access procedure and RRC re-establishment procedure.
5. I-RNTI (Inactive radio network temporary identifier), which is a reference to the UE context stored in the network and is used in RRC Resume procedure.
6. Temporary C-RNTI (Temporary Cell Access radio network temporary identifier), which is used in random access procedure for contention resolution.
7. CS-RNTI (Configured Scheduling radio network temporary identifier), which is used in configured scheduled unicast transmission.
8. MCS-C-RNTI, which is used in Dynamically scheduled unicast transmission.
9. TPC-PUCCH-RNTI, which is used in PUCCH power control.
10. TPC-PUSCH-RNTI, which is used in PUSCH power control.
11. TPC-SRS-RNTI, which is used in SRS trigger and power control.
12. INT-RNTI, which is used asindication pre-emption in DL.
13. SFI-RNTI, which is used as Slot Format Indication on the given cell
14. SP-CSI-RNTI, which is used in Activation of Semi-persistent CSI reporting on PUSCH.

Item 2: Definitions of the extended radio network temporary identifiers
1. P-RNTI (Paging radio network temporary identifier): A fixed 24-bit or 32-bit or 64-bit hexa-decimal value (e.g. FFFFFE or FFFFFFFE or FFFFFFFFFFFFFFFE) is defined as the long P-RNTI.
2. SI-RNTI (System Information radio network temporary identifier): A fixed 24-bit or 32-bit or 64-bit hexa-decimal value (e.g. FFFFFF or FFFFFFFF or FFFFFFFFFFFFFFFF) is defined as the long SI-RNTI.
3. RA-RNTI (Random Access radio network temporary identifier): The RA-RNTI in NR is calculated based on the following formula:
   RA-RNTI= 1 + s_id + 14 × t_id + 14 × 80 × f_id + 14 × 80 × 8 × ul_carrier_id, where s_id is the index of the first OFDM symbol of the PRACH occasion (0 ≤ s_id < 14), t_id is the index of the first slot of the PRACH occasion in a system frame (0 ≤ t_id < 80), f_id is the index of the PRACH occasion in the frequency domain (0 ≤ f_id < 8), and ul_carrier_id is the UL carrier used for Random Access Preamble transmission (0 for NUL carrier, and 1 for SUL carrier).

Two possible modifications can be considered to obtain the long RA-RNTI:
Modification 1: A new computing formula is introduced. The following formula is an example of the new computing formula which is different from the existing formula.

RA-RNTI= 1 + s_id + 4 ×14 × t_id + 4 ×14 × 80 × f_id + 14 × 80 × 8 × ul_carrier_id, where s_id is the index of the first OFDM symbol of the PRACH occasion (0 ≤ s_id < 14), t_id is the index of the first slot of the PRACH occasion in a system frame (0 ≤ t_id < 80), f_id is the index of the PRACH occasion in the frequency domain (0 ≤ f_id < 8), and ul_carrier_id is the UL carrier used for Random Access Preamble transmission (0 for NUL carrier, and 1 for SUL carrier).

Modification 2: The existing computing formula is applied with the extended value range of the parameters used in the existing computing formula.

The RA-RNTI associated with the PRACH occasion in which the Random Access Preamble is transmitted is computed as:
RA-RNTI= 1 + s_id + 14 × t_id + 14 × 80 × f_id + 14 × 80 × 8 × ul_carrier_id, where s_id is the index of the first OFDM symbol of the PRACH occasion (0 ≤ s_id < 14), t_id is the index of the first slot of the PRACH occasion in a system frame (0 ≤ t_id < 160), f_id is the index of the PRACH occasion in the frequency domain (0 ≤ f_id < 32), and ul_carrier_id is the UL carrier used for Random Access Preamble transmission (0 for NUL carrier, and 1 for SUL carrier).

The new computing formula and the existing computing formula may be specified in the specification and will be known to both UE and the network device in advance before the signaling happens.

4. C-RNTI (Cell Access radio network temporary identifier):
A long RNTI is introduced which can be configured as RA-RNTI, Temporary C-RNTI, C-RNTI, CS-RNTI.

A 24-bit long RNTI is introduced.

### RNTI-Value-extended information element

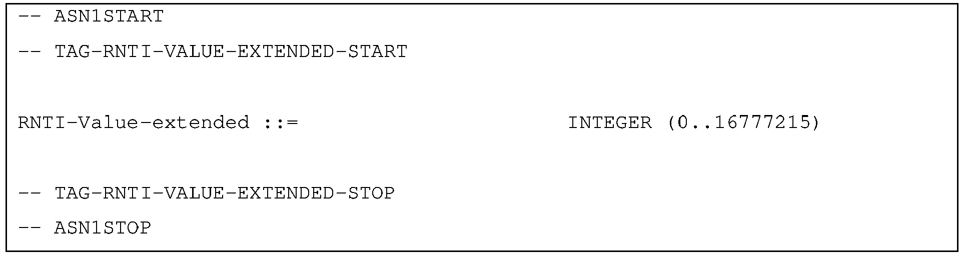

A 32-bit long RNTI is introduced which can be configured as RA-RNTI, Temporary C-RNTI, C-RNTI, CS-RNTI.

### RNTI-Value-extended information element

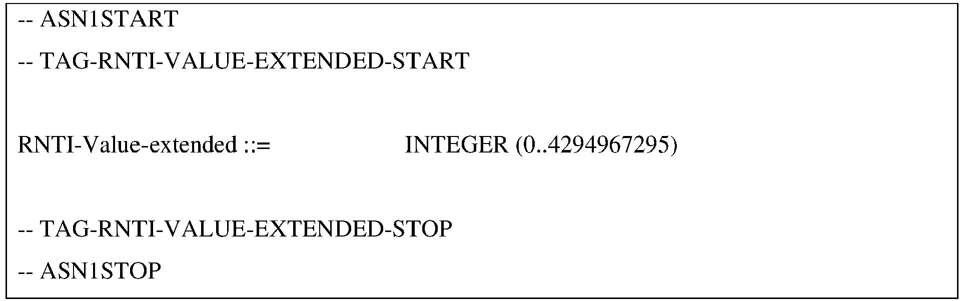

A 64-bit long RNTI is introduced which can be configured as RA-RNTI, Temporary C-RNTI, C-RNTI, CS-RNTI.

### RNTI-Value-extended information element

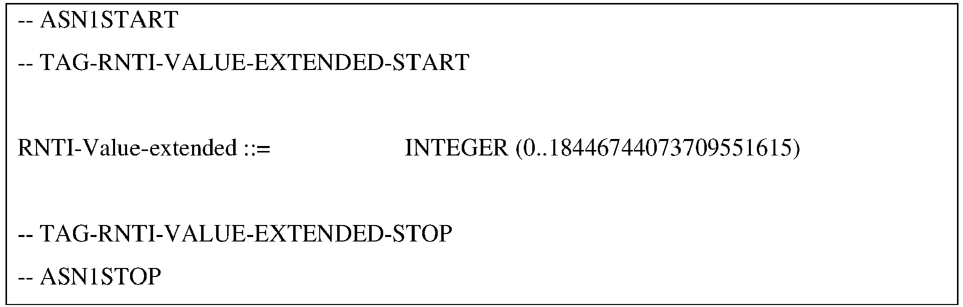

### Item 3: How to indicate UE to apply the extended radio network temporary identifiers

### 1. P-RNTI (Paging radio network temporary identifier)

An indication is broadcast in system information which indicates that the extended P-RNTI needs to be used. Upon receiving such indication, the UE applies the extended P-RNTI when receiving paging and system information change notification.

### 2. SI-RNTI (System Information radio network temporary identifier)

An indication is broadcast in MIB (Master Information Block) which indicates that the extended SI-RNTI needs to be used. Upon receiving such indication, the UE applies the extended SI-RNTI when receiving system information.

### 3. RA-RNTI (Random Access radio network temporary identifier)

An indication is broadcast in system information (e.g., MIB, SIB1 or other system information) which indicates that the extended RA-RNTI needs to be used. Upon receiving the indication, the UE computes the RA-RNTI based on the newly introduced computing formula or computes the RA-RNTI parameters based on the existing formula with the parameters whose value range has been extended and receives the random access response based on the computed RA-RNTI.

### 4. C-RNTI (Cell Access radio network temporary identifier)

i) ReconfigurationWithSync: The extended C-RNTI is added in ReconfigurationWithSync. After receiving the extended C-RNTI via ReconfigurationWithSync, UE applies it in the subsequent RRC Reconfiguration procedure, handover procedure, RRC Resume procedure, random access procedure and RRC re-establishment procedure. The example to configure ReconfigurationWithSync can be implemented as follows: 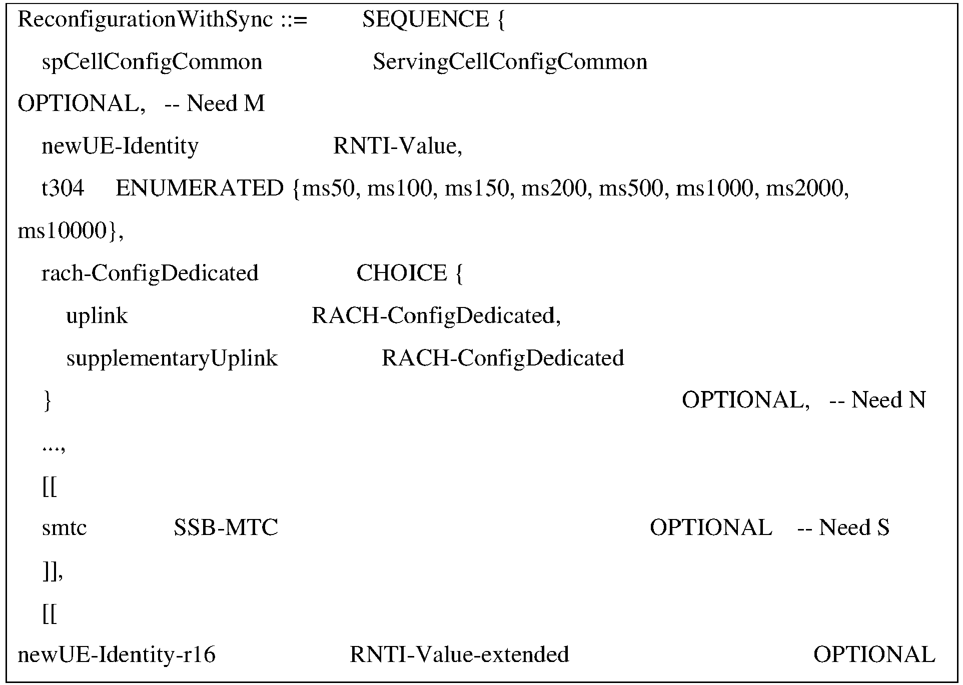 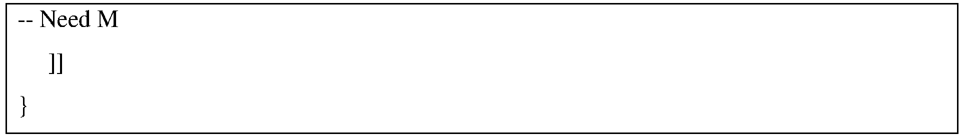
ii) Random access procedure: A extended C-RNTI MAC CE includes a single field defined as follows is introduced:

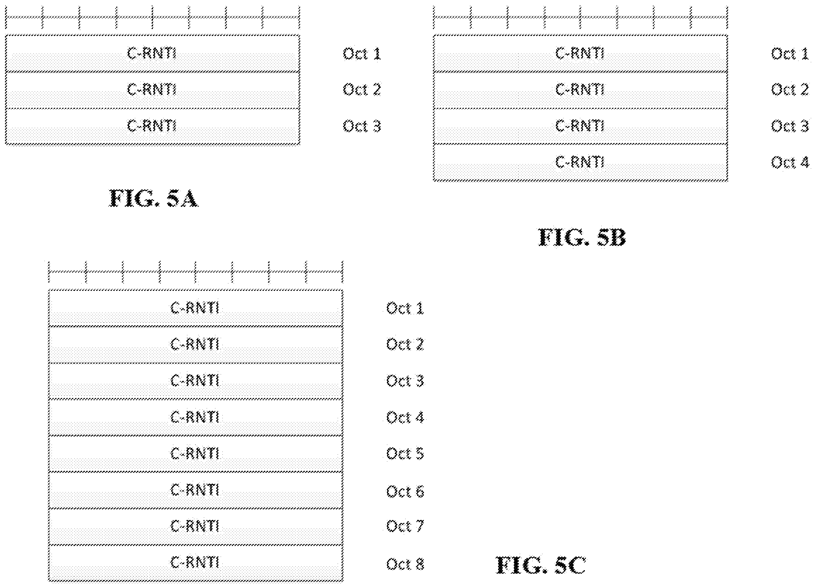

   FIGS.5a to 5c show extended C-RNTI MAC CEs, i.e., 24-bit C-RNTI MAC CE, 32-bit C-RNTI MAC CE, and 64-bit C-RNTI MAC CE, respectively.
iii) RRC Resume procedure: An extended variable VarResumeMAC-Input-Extended is introduced in which the source C-RNTI is set to the extended C-RNTI.

The UE variable VarResumeMAC-Input-Extended specifies the input used to generate the resumeMAC-I during RRC Connection Resume procedure.

### VarResumeMAC-Input- Extended variable

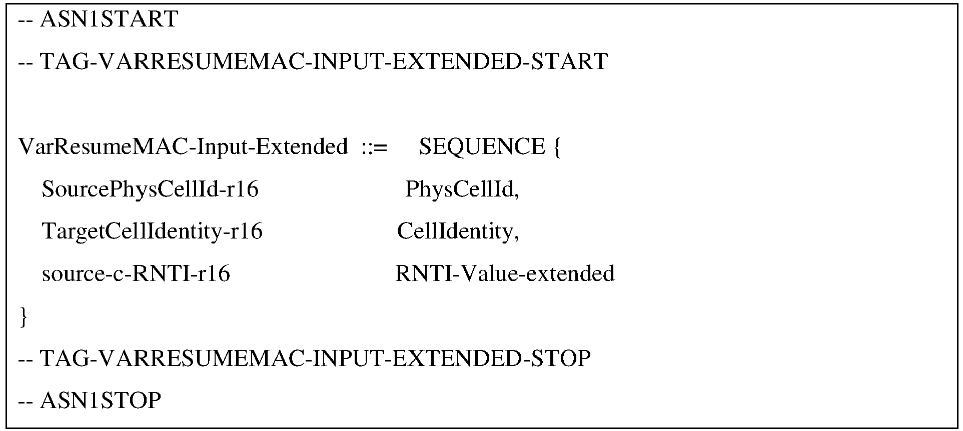

### iv) RRC Re-establishment procedure:

An extended variable VarShortMAC-Input-Extended is introduced in which the source C-RNTI is set to the extended C-RNTI. The UE variable VarShortMAC-Input-Extended specifies the input used to generate the shortMAC-I during RRC Connection Reestablishment procedure in NTN.

### VarShortMAC-Input-Extended variable

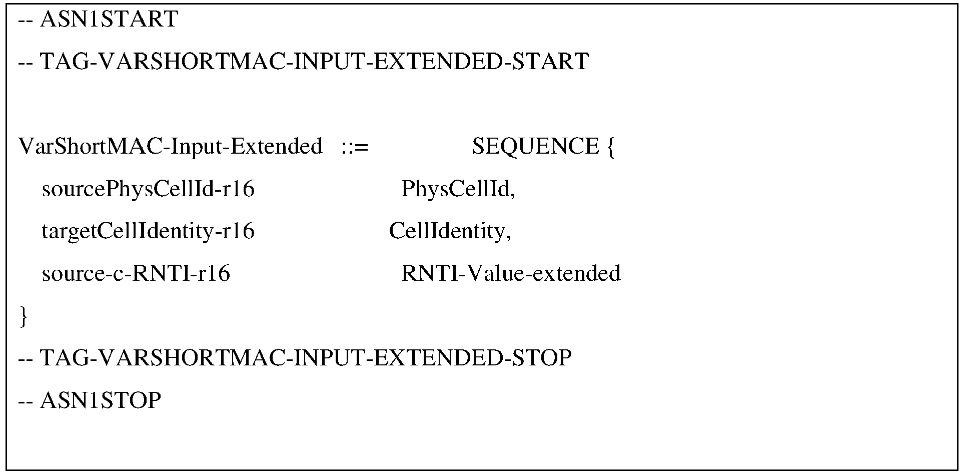

An RRCReestablishmentRequest1 message containing the extended C-RNTI is introduced and is sent via UL-CCCH1-Message.
- RRCReestablishmentRequest1

The *RRCReestablishmentRequest1* message is used to request the reestablishment of an RRC connection.
Signalling radio bearer: SRB0
RLC-SAP: TM
Logical channel: CCCH1
Direction: UE to Network

### RRCReestablishmentRequest1 message

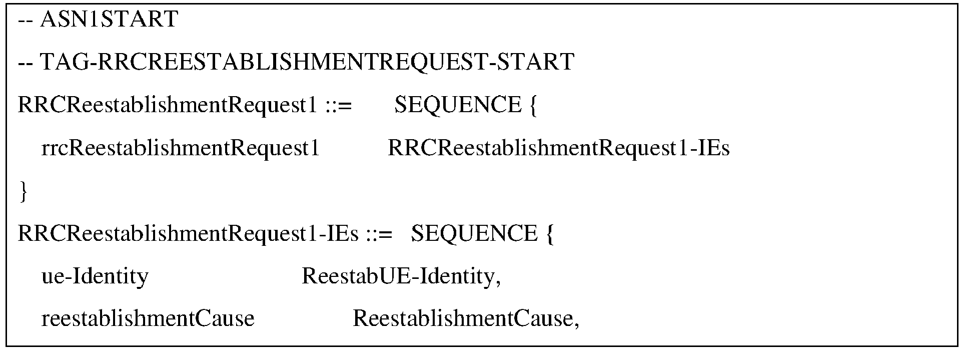

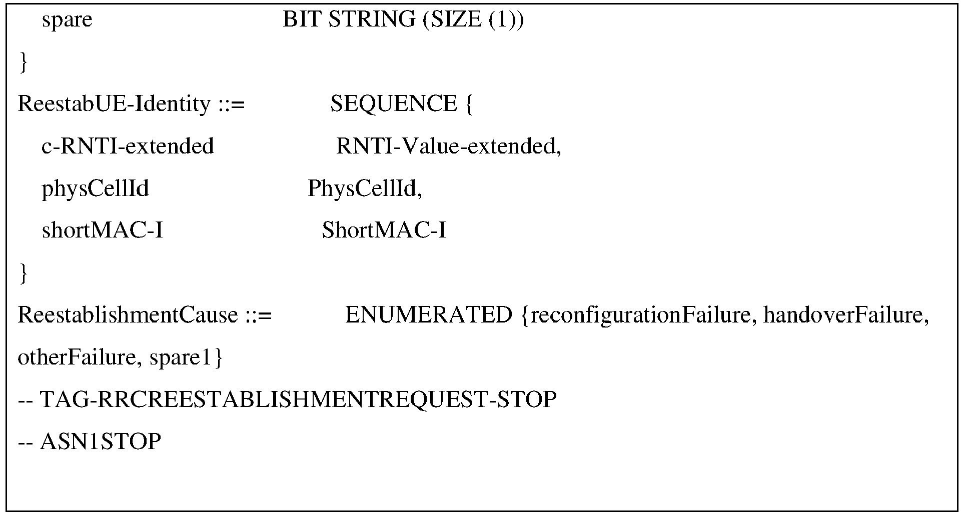

- UL-CCCH1-Message

The *UL-CCCH1-Message* class is the set of 64-bits RRC messages that may be sent from the UE to the Network on the uplink CCCH1 logical channel.

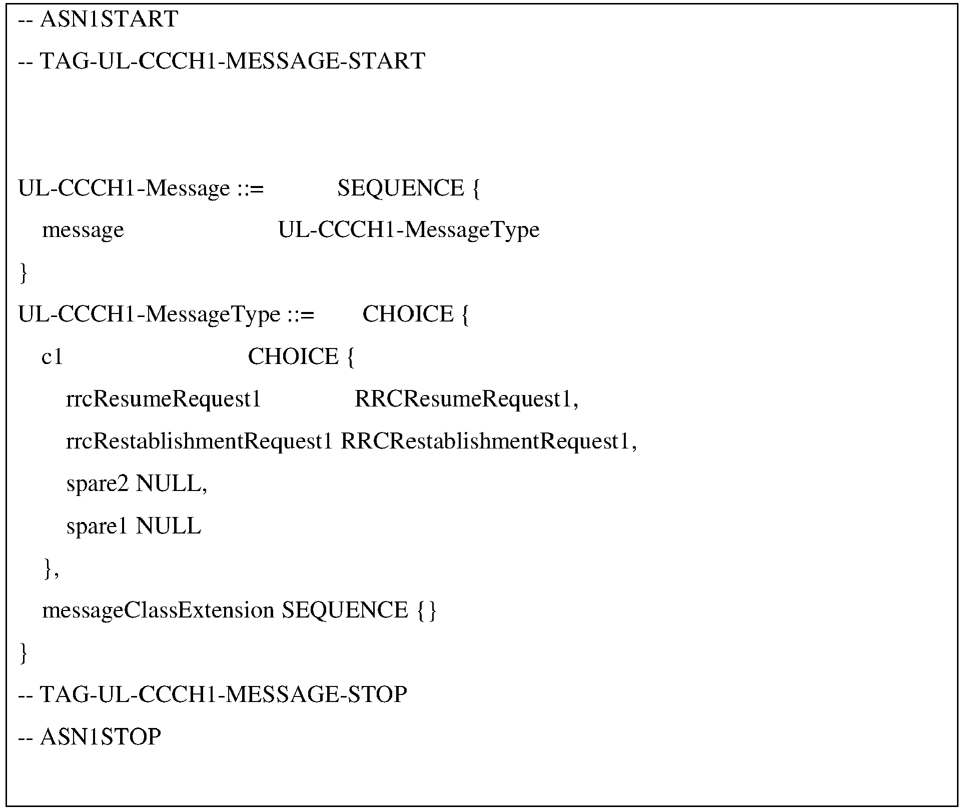

v) Handover procedure: The extended C-RNTI is added in HandoverPreparationInformation message.

### HandoverPreparationInformation

This message is used to transfer the NR RRC information used by the target gNB during handover preparation, including UE capability information. This message is also used for transferring the information between the CU and DU.

Direction: source gNB/source RAN to target gNB or CU to DU.

### HandoverPreparationInformation message

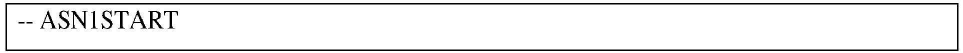

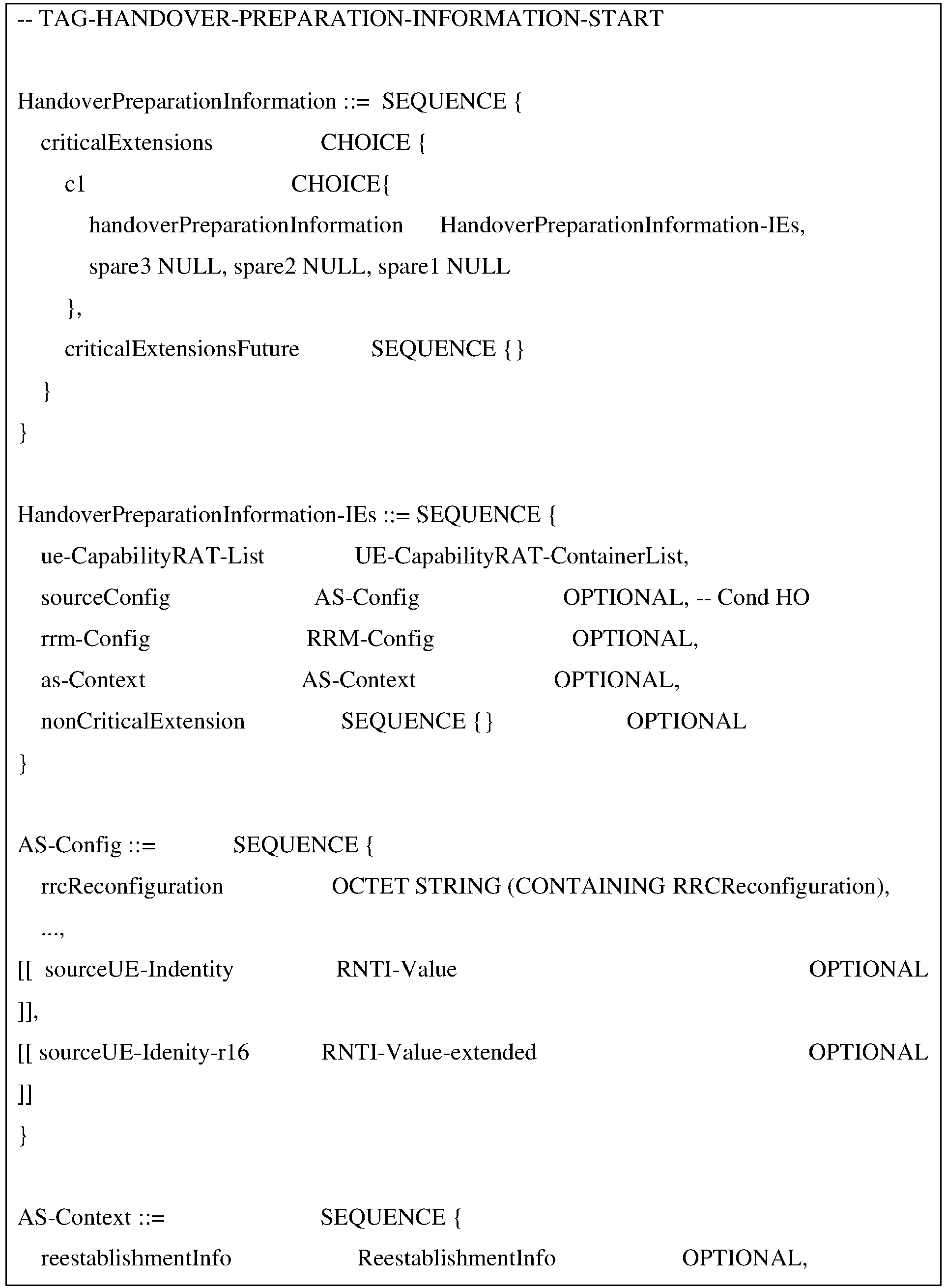

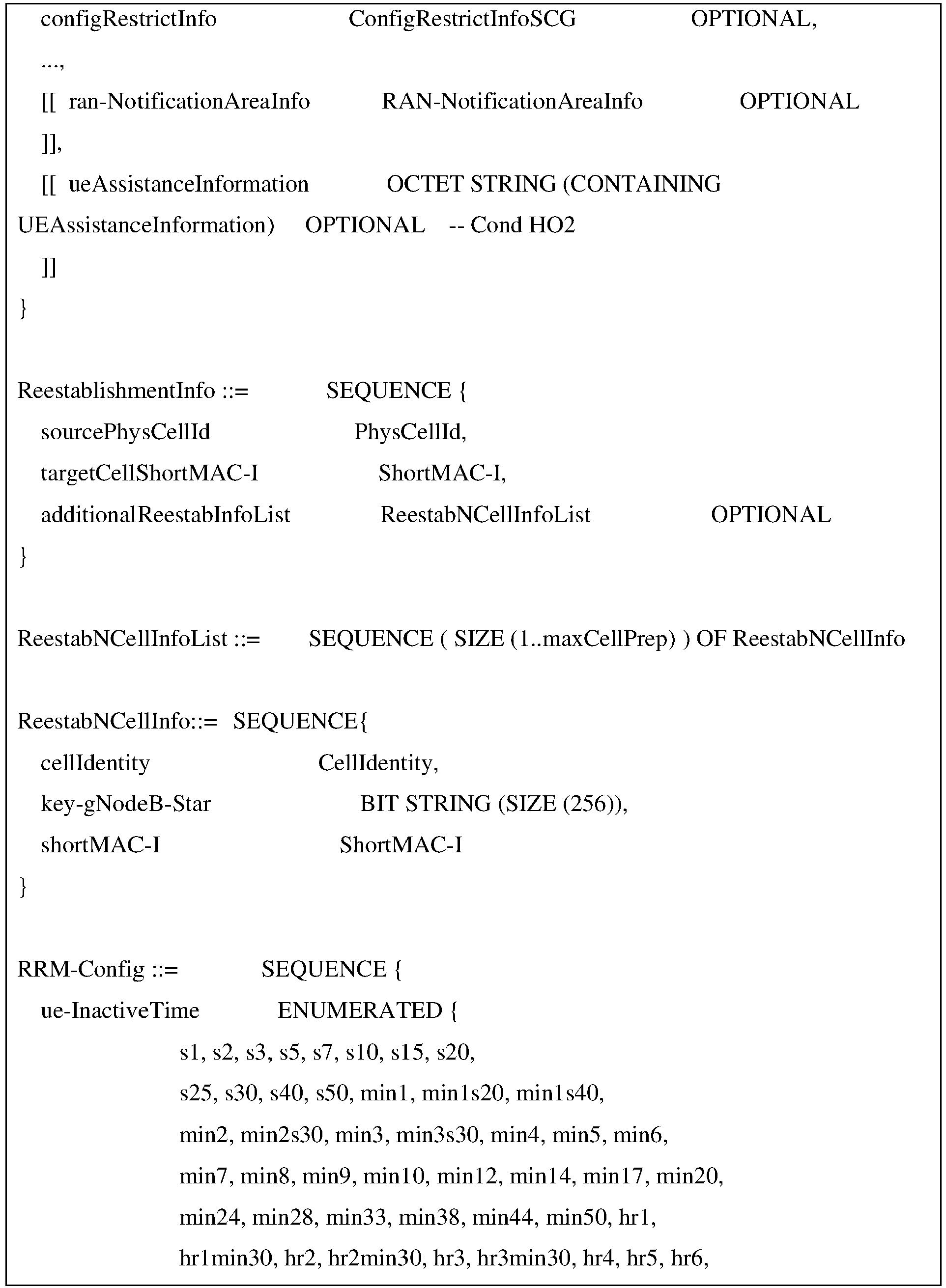

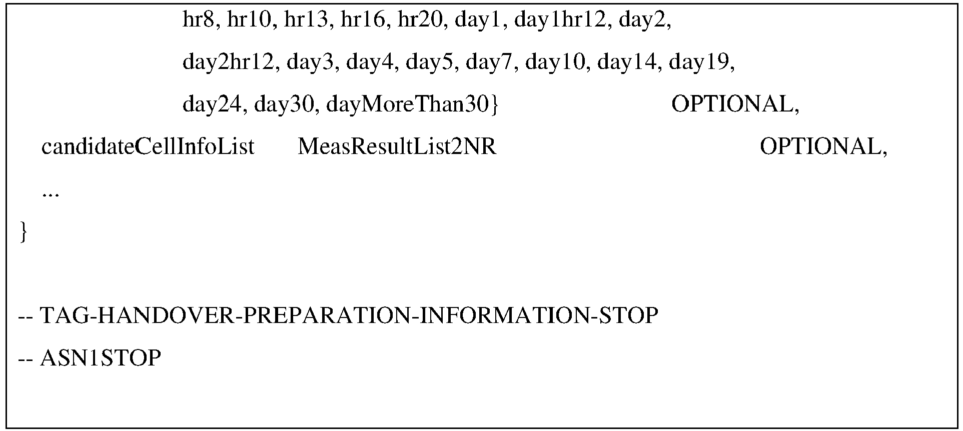

The suggested techniques can be performed in various manners depending on the types of the configuration message and types of radio network temporary identifier(s). The following implementations are discussed with reference to the drawings.

### Implementation 1

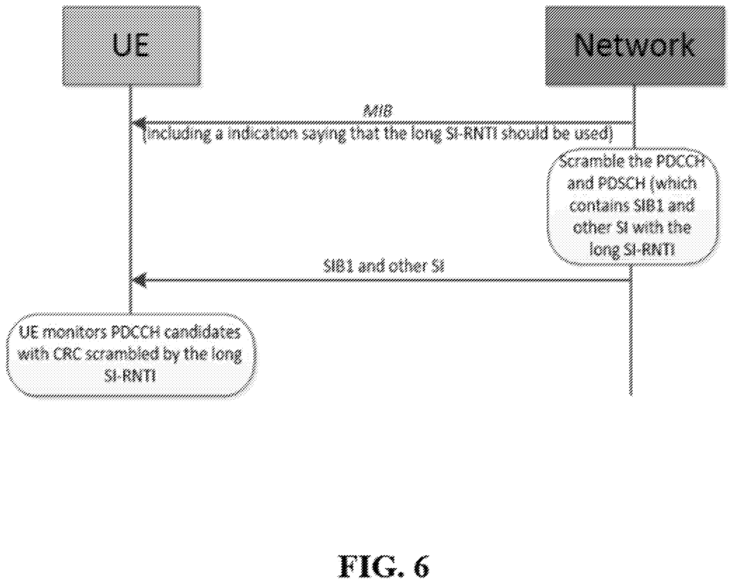

One indication may be included in MIB to indicate that a long SI-RNTI will be used in the cell. The length of long SI-RNTI will be defined in specs. The indication can be a 1-bit indication. FIG. 6 shows an example of communications between a user device and a network device. The network device transmits to the UE the MIB which includes the indication that the long SI-RNTI needs to be used. Then, the network device scrambles the PDCCH and PDSCH which contain SIB1 and other SI with the long SI-RNTI. Then, the network device transmits SIB1 and other SI to the UE. The UE monitors PDCCH candidates with CRC scrambled by SIRNTI to receive SIB1 and other SI. Although FIG. 6 shows the UE's monitoring occurs after the network device transmits SIB1 and other SI, the UE's monitoring can be initiated even before the network device transmits SIB 1 and other SI. When receiving the SIB 1 and other SI, the UE can decode the SIB1 and other SI using the long SI-RNTI.

### Implementation 2

One indication may be included in MIB to indicate whether a set of long RNTI will be used in the cell. The length of long RNTI will be defined in specs. The set of RNTI will be defined in specs, which may include at least one of the following: SI-RNTI, C-RNTI, RA-RNTI, Temporary C-RNTI, P-RNTI, I-RNTI. The indication can be a 1-bit indication.

### Implementation 3

One or more indications can be included in SIB1 to indicate that one or more long RNTIs needs to be used. Examples of the RNTIs indicated may include at least one of the following: RA-RNTI, C-RNTI, P-RNTI, or I-RNTI.

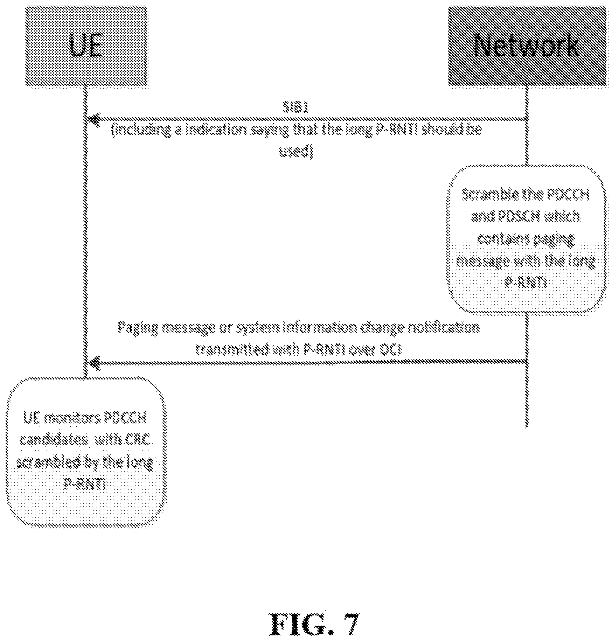

FIG. 7 shows an example of communications between a user device and a network device. The network device transmits to the UE the SIB1 which includes the indication that the long P-RNTI needs to be used. P-RNTI is used by the UEs for the reception of paging message. The network device scrambles the PDCCH and PDSCH which contain paging message with the long P-RNTI. Then, the network device transmits paging message or system information change notification transmitted with the long P-RNTI over DCI. The UE monitors PDCCH candidates with CRC scrambled by the long P-RNTI to receive paging message (or system information change notification). When receiving the paging information or system information change notification, the UE can decode the paging message or system information change notification using the long P-RNTI.

FIG. 8 shows an example of communications between a user device and a network device. The network device transmits to the UE the SIB1 which includes the indication that the long RA-RNTI needs to be used. In some implementations, the indication further includes a length of the RA-RNTI. In this case, the length of the RA-RNTI is included to help the UE to select the formula to compute the long RA-RNTI. The RA-RNTI is used during a random access procedure in which the network device generates random access response as a response to a random access preamble transmitted by the UE. Referring to FIG. 8, in response to the receiving of SIB 1, the UE transmits the random access preamble to the network. The network computes the long RA-RNTI based on a corresponding formula. At the UE side, after transmitting the random access preamble, the UE also computes the long RA-RNTI based on the corresponding formula. As previously discussed, the formula for computing the long identifiers are stored in the specifications and will be known to both UE and the network device in advance before the UE and the network device perform their operations. After the computing of the RA-RNTI, the network transmits the random access response based on the computed RA-RNTI. The UE receives the random access response based on the computed RA-RNTI..

### Implementation 4

One or more indications can be included in a RRC reconfiguration message to indicate that long RNTIs needs to be used. Examples of the RNTIs indicated may include at least one of the following: RA-RNTI, C-RNTI, CS-RNTI, or I-RNTI.

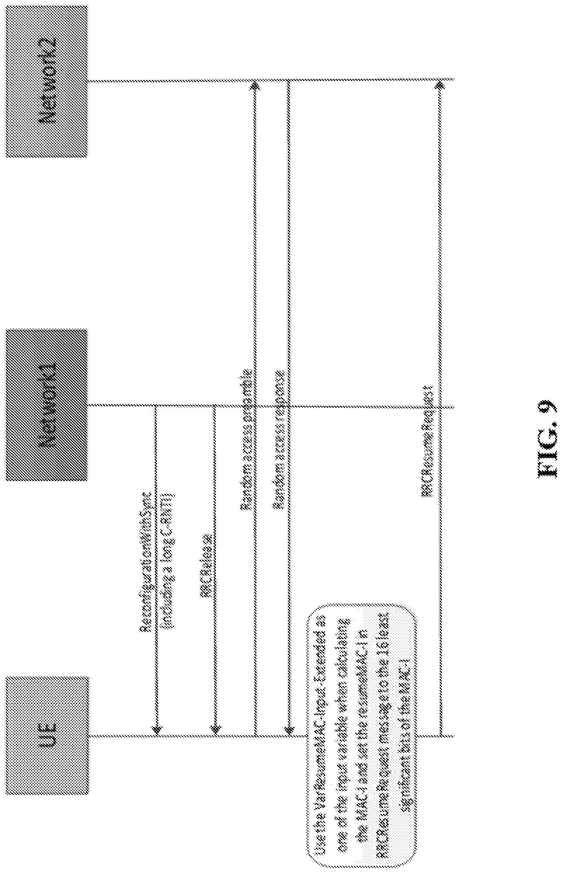

FIG. 9 shows an example of communications between a user device, a network device 1, and a network device 2. The network device 1 (source network) transmits the reconfiguration message including the long C-RNTI. For example, the reconfiguration message may include a ReconfigurationWithSync. Then, the UE is released from RRC_CONNECTED state to RRC_INACTIVE state via a RRCRelease message sent from the network device 1. Then, the UE wants to resumes from RRC_INACTIVE state and initiates random access procedure. The UE uses the VarResumeMAC-Input-Extended in which the source C-RNTI is set to the extended C-RNTI received from the network device 1 as input variables when calculating the MAC-I. Then, the UE sets the resumeMAC-I to the 16 least significant bits of the MAC-I and sends it to a network device 2 (target network) via a RRCResumeRequest message.

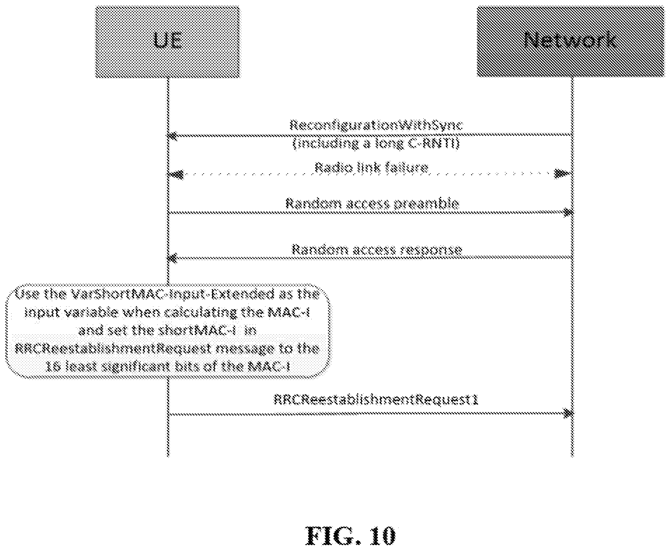

FIG. 10 shows another example of communications between a user device and a network device. The network device transmits the reconfiguration message including the long C-RNTI. For example, the reconfiguration message may include a ReconfigurationWithSync. Then, the radio link failure occurs. To re-establish the RRC connection, the UE initiates a random access procedure. Then, the UE uses the VarShortMAC-Input-Extended in which the source C-RNTI is set to the extended C-RNTI received from the network device as input variables when calculating the MAC-I. Then, the UE sets the shortMAC-I to the 16 least significant bits of the MAC-I and sends it to network device via a RRCReestablishmentRequest1 message.

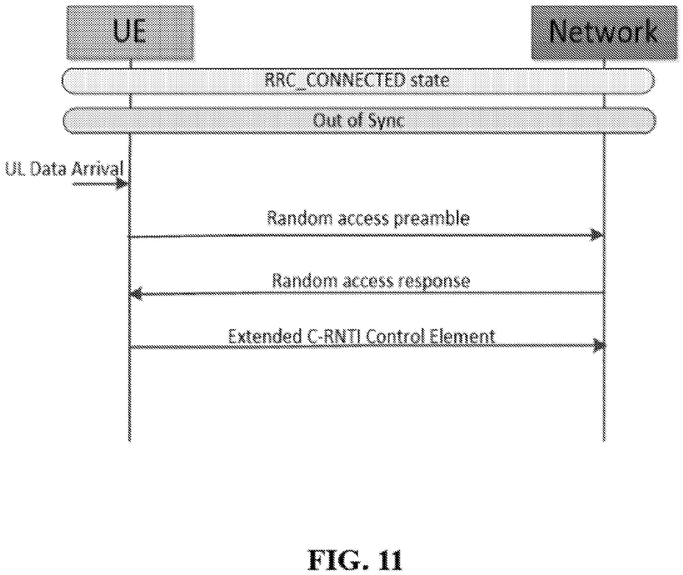

FIG. 11 shows another example of communications between a user device and a network device. The UE is configured with a long C-RNTI via ReconfigurationWithSync. Then, when UL data arrives, the UE determines the format of C-RNTI MAC CE format based on the length of C-RNTI determined, initiates random access procedure, and transmits the extended C-RNTI Control Element after receiving random access procedure.

In examples shown in FIGS. 9-11, in the reconfigurationwithsync message, the long C-RNTI along with an indication inform the UE that the long C-RNTI will be used in the subsequent procedures. In this case, after the network device configures the long C-RNTI to UE, an original short C-RNTI and a long C-RNIT will be available on the UE side. The indication is also configured in the reconfigurationwithsync message to tell UE to use the longer C-RNTI.

### Implementation 5

Special value of the existing signaling field can be used to indicate the length of RNTI. The special value can be reserved value, or invalid value in the previous release/version of specs, or value with specific meaning.

### Implementation 6

The combination of special value of multiple existing signaling field can be used to indicate the length of RNTI. The special value can be reserved value, or invalid value in the previous release/version of specs, or value with specific meaning.

### Implementation 7

The length of RNTI is linked to frequency band, in which case, the length of RNTI used for a certain frequency band is explicitly specified in specs.

### Implementation 8

The length of RNTI is linked to cell type, in which case, the length of RNTI used for a certain type of cell is explicitly specified in specs. The cell type refers to NTN cell or TN cell.

In the above implementations, the length of long RNTI may be specified in specs (e.g. 24bit or 32bit or 64bit).

In some implementations (e.g., Implementations 3 and 4 above), the indication can be configured per cell, per BWP or per CORESET. In In some implementations (e.g., Implementations 3 and 4 above), separate indications can be introduced for different types of RNTI. In some implementations (e.g., Implementations 3 and 4 above), the indication can be an one-bit indication to indicate whether the long RNTI will be used or the indication can be a bitmap in which each bit may be linked to one kind of RNTI, and each bit will be used to indicate the length of the corresponding RNTI.

In some implementations, the UE determines the length of RNTI(s). Then, based on the length of C-RNTI determined or based on the configuration parameters which can be used to determine the length of C-RNTI, the UE further determines the CCCH message used for the RRC Connection Reestablishment Request. For example, there will be two types of RRCConnectionReestablishmentRequest message. The first kind of RRCConnectionReestablishmentRequest message will be used for the 16bit C-RNTI, and the second kind of RRCConnectionReestablishmentRequest (e.g. RRCConnectionReestablishmentRequest1) message will be used for the long C-RNTI (e.g. 24 bits or 32 bits or 64 bits, which may be specified in specs).

In some implementations, based on the length of I-RNTI determined or based on the configuration parameters which can be used to determine the length of I-RNTI, the UE further determine the CCCH message used for the RRC Connection Resume Request. For example, there will be three types of RRCConnectionResumeRequest message. The first kind of RRCConnectionResumeRequest message will be used for the 24bit truncated I-RNTI, the second kind of RRCConnectionResumeRequest (e.g. RRCConnectionResumeRequest1) message will be used for the 40-bit full I-RNTI and the third kind of (RRCConnectionResumeRequest (e.g. RRCConnectionResumeRequest2) message will be used for the long I-RNTI, e.g. 64bits, which will be specified in specs).

During the random access procedure (RACH), the C-RNTI MAC CE will be used (e.g. included in MsgA and/or MsgB in 2-step RACH procedure, or be included Msg3 in 4-step RACH procedure). Based on the length of C-RNTI, different formats will be used for the C-RNTI MAC CE. Therefore, the following enhancements can be considered in the C-RNTI MAC CE transmission and reception:
Based on the length of C-RNTI determined or based on the configuration parameters which can be used to determine the length of C-RNTI, the UE can further determine the format or type of C-RNTI MAC CE which will be transmitted in the RACH procedure.
Based on the length of C-RNTI determined or based on the configuration parameters which can be used to determine the length of C-RNTI, the network device can further determine the format or type of C-RNTI MAC CE which will be transmitted in the RACH procedure.
Based on the length of C-RNTI determined or based on the configuration parameters which can be used to determine the length of C-RNTI, the UE further determine the format or type of C-RNTI MAC CE which will be received in the RACH procedure.
Based on the length of C-RNTI determined or based on the configuration parameters which can be used to determine the length of C-RNTI, the network further determine the format or type of C-RNTI MAC CE which will be received in the RACH procedure.

To distinguish the two types of C-RNTI MAC CE, the following two implementations can be considered.

Implementation 1: Different logical channel IDs will be used for the C-RNTI MAC CE with different length, in which case the reception side can distinguish the two types of C-RNTI MAC CE based on the logical channel ID in the MAC subheader.

Implementation 2: The same logical channel ID will be used for the C-RNTI MAC CE, in which case the reception side shall determine the type of C-RNTI MAC CE based on the configuration parameters or the length of C-RNTI MAC CE, which is determined before the RA procedure.

During the RACH procedure, the RA-RNTI will be used in the reception of MsgB (in 2-step RACH) and/or Msg2 (in 4-step RACH). The RA-RNTI is determined based on the formula defined in 3GPP specs (e.g. 36.321, 38.321). Considering the RA-RNTI with different lengths may be linked to different formulas, the following enhancement can be considered:
For the UE side, based on the length of RA-RNTI determined or based on the configuration parameters which can be used to determine the length of RA-RNTI, the UE further determines the formula used for RA-RNTI calculation based on the length of RA-RNTI. Different formulas will be given in specs for the RA-RNTI with different lengths.

For the network device side, before the transmission of MsgB or Msg2, the network device determines the formula used for RA-RNTI calculation based on the length of RA-RNTI.

Different formulas mentioned above also can include the formulas with same parameters but different value ranges.

For the security aspect, different formulas may be defined for the C-RNTI with different lengths in at least one of the following aspects: key generation algorithm, short MAC-I calculation, resume MAC-I calculation. Therefore, the following enhancement can be considered:
For the UE side, based on the length of C-RNTI determined or based on the configuration parameters which can be used to determine the length of C-RNTI, the UE further determines the formula used for key generation algorithm, and/or short MAC-I calculation, and/or resume MAC-I calculation.

For the network device side, based on the length of C-RNTI determined or based on the configuration parameters which can be used to determine the length of C-RNTI, the network device further determines the formula used for key generation algorithm, and/or short MAC-I calculation, and/or resume MAC-I calculation.

For the scrambling operation, since RNTI (e.g. C-RNTI, RA-RNTI, CS-RNTI) will be used in the scrambling of PDSCH and/or PUSCH and/or PDCCH transmission, and different length of RNTI may be linked to different scrambling method, the follow enhancement can be considered.

For the UE side, based on the length of RNTI determined or based on the configuration parameters which can be used to determine the length of RNTI, the UE further determine the method used for scrambling operation for PDSCH and/or PUSCH and/or PDCCH. Here the RNTI may refer to SI-RNTI, C-RNTI, RA-RNTI, CS-RNTI, P-RNTI, I-RNTI.

For the network side, based on the length of RNTI determined or based on the configuration parameters which can be used to determine the length of RNTI, the network further determine the method used for scrambling operation for PDSCH and/or PUSCH and/or PDCCH. Here the RNTI may refer to SI-RNTI, C-RNTI, RA-RNTI, CS-RNTI, P-RNTI, I-RNTI.

It is intended that the specification, together with the drawings, be considered exemplary only, where exemplary means an example and, unless otherwise stated, does not imply an ideal or a preferred embodiment. As used herein, the use of "or" is intended to include "and/or", unless the context clearly indicates otherwise.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. A wireless communication method, comprising:
transmitting, by a network device, to a user device, system information comprising a configuration information including an indication indicating that a long radio network temporary identifier having a length greater than that of a short radio network temporary identifier needs to be used, the indication being a 1-bit indication;
receiving, by the nework device, after the transmitting of the configuration information, a random access preamble from the user device; and
transmitting, by the network device, to the user device, a random access response based on the long radio network temporary identifier, wherein the long radio network temporary identifier is a long random access radio network temporary identifier and the short radio network temporary identifier is a short random access radio network temporary identifier

2. The wireless communication method of claim 1, wherein the configuration information is included in a MIB, Master Information Block, or a SIB1, System Information Block 1.

3. The wireless communication method of claim 1, further comprising, after transmitting the configuration information, (1) computing, by the network device, the long identifier using a formula or (2) determining, by the network device, based on the configuration information, scrambling information of at least one of PDSCH, Physical Downlink Shared Channel, PUSCH, Physical Uplink Shared Channel, or PDCCH, Physical Downlink Control Channel.

4. The wireless communication method of claim 1, wherein the indication is configured per cell, per BWP, Bandwidth Part, or per CORESET, Control Resource Set.

5. The wireless communication method of claim 1, wherein the configuration information includes a length of the long radio network temporary identifier.

6. A wireless communication method, comprising:
receiving, by a user device, from a network device, system information comprising a configuration information including an indication indicating that a long radio network temporary identifier having a length greater than that of a short radio network temporary identifier needs to be used, the indication being a 1-bit indication;
transmitting, by the user device, after the receiving of the configuration information, a random access preamble to the network device; and
receiving, by the user device, from the network device, a random access response based on the long radio network temporary identifier, wherein the long radio network temporary identifier is a long random access radio network temporary identifier and the short radio network temporary identifier is a short random access radio network temporary identifier

7. The wireless communication method of claim 6, wherein the configuration information is included in a MIB, Master Information Block, or a SIB1, System Information Block.

8. The wireless communication method of claim 6, further comprising, after the receiving the configuration information, one of: (1) computing, by the user device, the long identifier using a formula or (2) determining, by the user device, based on the configuration information, scrambling information of at least one of PSDCH, Physical Downlink Shared Channel, PUSCH, Physical Uplink Shared Channel, or PDCCH, Physical Downlink Control Channel.

9. The wireless communication method of claim 6, wherein the indication is configured per cell, per BWP, Bandwidth Part, or per CORESET, Control Resource Set.

10. The wireless communication method of claim 6, wherein the configuration information includes a length of the long identifier.

11. A network device (210) comprising a processor (220) configured to implement a method recited in any one of claims 1 to 5, or a user device (210) comprising a processor (220) configured to implement a method recited in any of claims 6 to 10.

## Patentansprüche

1. Verfahren zur Drahtloskommunikation, umfassend:
Übertragen, von einer Netzwerkvorrichtung an eine Benutzervorrichtung, von Systeminformationen, die Konfigurationsinformationen umfassen, die eine Angabe beinhalten, dass eine temporäre Long-Funknetzkennung mit einer Länge verwendet werden soll, die länger ist als eine temporäre Short-Funknetzkennung, wobei die Angabe eine 1-Bit-Angabe ist,
Empfangen einer Direktzugriffspräambel von der Benutzervorrichtung durch die Netzwerkvorrichtung nach der Übertragung der Konfigurationsinformationen, und
Übertragen einer Direktzugriffsantwort durch die Netzwerkvorrichtung an die Benutzervorrichtung auf der Grundlage der temporären Long-Funknetzkennung, wobei die temporäre Long-Funknetzkennung eine temporäre Long-Direktzugriff-Funknetzkennung ist und die temporäre Short-Funknetzkennung eine temporäre Short-Direktzugriff-Funknetzkennung ist.

2. Verfahren zur Drahtloskommunikation nach Anspruch 1, wobei die Konfigurationsinformationen in einem MIB, Master Information Block, oder in einem SIB1, System Information Block 1, enthalten sind.

3. Verfahren zur Drahtloskommunikation nach Anspruch 1, ferner umfassend, nach dem Übertragen der Konfigurationsinformationen, (1) Berechnen der Long-Kennung durch die Netzwerkvorrichtung unter Verwendung einer Formel, oder (2) Bestimmen, durch die Netzwerkvorrichtung, auf Grundlage der Konfigurationsinformationen, von Scramblinginformationen von einem PDSCH, Physical Downlink Shared Channel, und/oder PUSCH, Physical Uplink Shared Channel und/oder PDCCH, Physical Downlink Control Channel.

4. Verfahren zur Drahtloskommunikation nach Anspruch 1, wobei die Angabe pro Zelle, pro BWP, Bandwidth Part, oder pro CORESET, Control Resource Set, konfiguriert wird.

5. Verfahren zur Drahtloskommunikation nach Anspruch 1, wobei die Konfigurationsinformationen eine Länge der temporären Long-Funknetzkennung umfassen.

6. Verfahren zur Drahtloskommunikation, umfassend:
Empfangen, durch eine Nutzervorrichtung von einer Netzwerkvorrichtung, von Systeminformationen, die Konfigurationsinformationen umfassen, die eine Angabe beinhalten, dass eine temporäre Long-Funknetzkennung mit einer Länge verwendet werden soll, die länger ist als eine temporäre Short-Funknetzkennung, wobei die Angabe eine 1-Bit-Angabe ist;
Übertragen, durch die Nutzervorrichtung an die Netzwerkvorrichtung, einer Direktzugriffspräambel nach dem Empfangen der Konfigurationsinformationen, und
Empfangen, durch die Benutzervorrichtung von der Netzwerkvorrichtung, einer Direktzugriffsantwort auf Grundlage der temporären Long-Funknetzkennung, wobei die temporäre Long-Funknetzkennung eine temporäre Long-Direktzugriff-Funknetzkennung ist und die temporäre Short-Funknetzkennung eine temporäre Short-Direktzugriff-Funknetzkennung ist.

7. Verfahren zur Drahtloskommunikation nach Anspruch 6, wobei die Konfigurationsinformationen in einem MIB, Master Information Block, oder in einem SIB1, System Information Block, enthalten sind.

8. Verfahren zur Drahtloskommunikation nach Anspruch 6, ferner umfassend, nach dem Empfangen der Konfigurationsinformationen, (1) Berechnen, durch die Benutzervorrichtung, der Long-Kennung unter Verwendung einer Formel, oder (2) Bestimmen, durch die Benutzervorrichtung, auf Grundlage der Konfigurationsinformation, von Scramblinginformation von PDSCH, Physical Downlink Shared Channel, und/oder PUSCH, Physical Uplink Shared Channel, und/oder PDCCH, Physical Downlink Control Channel.

9. Verfahren zur Drahtloskommunikation nach Anspruch 6, wobei die Angabe pro Zelle, pro BWP, Bandwidth Part, oder pro CORESET, Control Resource Set, konfiguriert wird.

10. Verfahren zur Drahtloskommunikation nach Anspruch 6, wobei die Konfigurationsinformationen eine Länge der Long-Kennung umfassen.

11. Netzwerkvorrichtung (210), aufweisend einen Prozessor (220), welcher derart konfiguriert ist, dass er ein Verfahren nach einem der Ansprüche 1 bis 5 implementiert, oder eine Benutzervorrichtung (210) mit einem Prozessor (220), welcher derart konfiguriert ist, dass er ein Verfahren nach einem der Ansprüche 6 bis 10 implementiert.

## Revendications

1. Procédé de communication sans fil, comprenant :
la transmission, par un dispositif de réseau, à un dispositif utilisateur, d'informations de système comprenant des informations de configuration comportant une indication indiquant qu'un identifiant temporaire de réseau radio long présentant un longueur supérieure à celle d'un identifiant temporaire de réseau radio court doit être utilisé, l'indication étant une indication à 1 bit;
la réception, par le dispositif de réseau, après la transmission des informations de configuration, d'un préambule d'accès aléatoire du dispositif utilisateur ; et
la transmission, par le dispositif de réseau, au dispositif utilisateur, d'une réponse d'accès aléatoire sur la base de l'identifiant temporaire de réseau radio long, dans lequel l'identifiant temporaire de réseau radio long est un réseau temporaire de réseau radio d'accès aléatoire long et l'identifiant temporaire de réseau radio court est un identifiant temporaire de réseau radio d'accès aléatoire court.

2. Procédé de communication sans fil selon la revendication 1, dans lequel les informations de configuration sont comprises dans un bloc d'informations maître (MIB) ou un bloc d'informations système 1 (SIB1).

3. Procédé de communication sans fil selon la revendication 1, comprenant en outre, après la transmission des informations de configuration, (1) le calcul, par le dispositif de réseau, de l'identifiant long en utilisant une formule ou (2) la détermination, par le dispositif de réseau, sur la base des informations de configuration, d'informations de brouillage d'au moins un de PDSCH, de PUSCH ou PDCCH.

4. Procédé de communication sans fil selon la revendication 1, dans lequel l'indication est configurée par cellule, par BWP ou par CORESET.

5. Procédé de communication sans fil selon la revendication 1, dans lequel les informations de configuration comportent une longueur de l'identifiant temporaire de réseau radio long.

6. Procédé de communication sans fil comprenant :
la réception, par un dispositif utilisateur, d'un dispositif de réseau, d'informations de système comprenant des informations de configuration comportant une indication indiquant qu'un identifiant temporaire de réseau radio long présentant une longueur supérieure à celle d'un identifiant temporaire de réseau radio court doit être utilisé, l'indication étant une indication à 1 bit ;
la transmission, par le dispositif utilisateur, après la réception des informations de configuration, d'un préambule d'accès aléatoire au dispositif de réseau ; et
la réception, par le dispositif utilisateur, du dispositif de réseau, d'une réponse d'accès aléatoire sur la base de l'identifiant temporaire de réseau radio long, dans lequel l'identifiant temporaire de réseau radio long est un identifiant temporaire de réseau radio d'accès aléatoire long et l'identifiant temporaire de réseau radio court est un identifiant temporaire de réseau radio d'accès aléatoire court.

7. Procédé de communication sans fil selon la revendication 6, dans lequel les informations de configuration sont comprises dans un MIB, ou dans un SIB 1.

8. Procédé de communication sans fil selon la revendication 6, comprenant en outre, après la réception des informations de configuration, un de : (1) le calcul, par le dispositif utilisateur, de l'identifiant long en utilisant une formule ou (2) la détermination, par le dispositif utilisateur, sur la base des informations de configuration, d'informations de brouillage d'au moins un de PSDCH, de PUSCH, ou de PDCCH.

9. Procédé de communication sans fil selon la revendication 6, dans lequel l'indication est configurée par cellule, par BWP ou par CORESET.

10. Procédé de communication sans fil selon la revendication 6, dans lequel les informations de configuration comportent une longueur de l'identifiant long.

11. Dispositif de réseau (210) comprenant un processeur (220) configuré pour mettre en oeuvre un procédé selon l'une quelconque des revendications 1 à 5, ou un dispositif utilisateur (210) comprenant un processeur (220) configuré pour mettre en oeuvre un procédé selon l'une quelconque des revendications 6 à 10.
